# EUROPEAN PATENT APPLICATION

(11) **EP 3 336 754 A2**
(43) Date of publication of application: **20.06.2018**
(21) Application number: 17201979.6
(22) Date of filing: 16.11.2017
(51) Int. Cl.: G06K 9/00

(54) **INFORMATION PROCESSING APPARATUS, PHOTOGRAPHING APPARATUS, MOVING OBJECT CONTROL SYSTEM, MOVING OBJECT, INFORMATION PROCESSING METHOD, AND PROGRAM**

(30) Priority: 25.11.2016 JP 2016229467; 21.09.2017 JP 2017181108
(71) Applicant: Ricoh Company Ltd., Ohta-ku Tokyo 143-8555 (JP)
(72) Inventor: AMANO, Seiya, Tokyo, 143-8555 (JP); YOKOTA, Soichiro, Tokyo, 143-8555 (JP); KIMURA, Sukehiro, Tokyo, 143-8555 (JP); YOSHIDA, Jun, Tokyo, 143-8555 (JP); OHBAYASHI, Yohichiroh, Tokyo, 143-8555 (JP); KUBOZONO, Hiroki, Tokyo, 143-8555 (JP); OKADA, Daisuke, Tokyo, 143-8555 (JP); KIDA, Shintaroh, Tokyo, 143-8555 (JP); SUZUKI, Tabito, Tokyo, 143-8555 (JP)
(74) Representative: Schwabe - Sandmair - Marx

(57) **Abstract**

An information processing apparatus includes a detecting unit that detects a candidate for an object on the basis of information of a position of an object in a vertical direction, a position of the object in a horizontal direction, and a position of the object in a depth direction which are associated with each other; and a determining unit that determines whether the candidate for an object detected by the detecting unit is an object moving surface, on the basis of a shape of the candidate for an object, wherein the object moving surface is a surface on which a moving object moves.

## Description

### BACKGROUND

### 1. Technical Field

The present invention relates to an information processing apparatus, a photographing apparatus, a moving object control system, a moving object, an information processing method, and a program.

### 2. Description of the Related Art

In the related art, concerning safety of an automobile, a body structure and so forth of the automobile have been developed from a viewpoint that, at a time of a collision between a pedestrian and the automobile, the pedestrian and the occupants of the automobile should be protected as effectively as possible.

In this regard, recently, thanks to a development of information processing technology and image processing technology, technology of detecting a person and an automobile at high speed has been developed. With the use of the technology, an automobile which automatically applies a brake to avoid a collision with an object has been developed. For this purpose, accurate measurement of the distance to a pedestrian or another automobile is desired, and therefore, distance measurement technology using a millimeter radar, a laser radar, a stereo camera, or the like, has been put into a practical use.

In this regard, for recognizing an object using a stereo camera, a disparity image is generated on the basis of disparity of the object appearing in a photographed luminance image. Then, pixels having similar disparity values are collected in the disparity image, and the object is recognized.

At such a time, the disparity of a road surface appearing in the luminance image is detected, and the height of the road surface is calculated depending on the distance from the vehicle that includes the stereo camera. Then, the object such as another vehicle or a pedestrian above the road surface is detected (for example, see Japanese Unexamined Patent Application Publication No. 2016-062356) .

In this regard, when an object such as another vehicle or a pedestrian will be detected from a disparity image, it is desired to prevent a road surface in the forward direction from being erroneously detected as an obstacle other than a road surface. Such erroneous detection may occur in a case where, for example, in a situation where the vehicle is travelling at a steep hill and a flat road surface occurs in the forward direction, the height of the road surface according to the distance is erroneously estimated.

An object of the present disclosure is, for example, providing technology with which it is possible to prevent an object moving surface such as a road surface on which a moving object moves from being erroneously detected as an object other than an object moving surface.

### SUMMARY OF THE INVENTION

An information processing apparatus has a detecting unit configured to detect a candidate for an object on the basis of information of a position of an object in a vertical direction, a position of the object in a horizontal direction, and a position of the object in a depth direction which are associated with each other; and a determining unit configured to determine whether the candidate for an object detected by the detecting unit is an object moving surface on the basis of a shape of the candidate for an object, wherein the object moving surface is a surface on which a moving object moves.

According to the disclosed technology, it is possible to avoid erroneous detection of an object moving surface as an object other than an object moving surface.

Other objects, features, and advantages will become more apparent from the following detailed description when read in conjunction with the accompanying drawings.

### BRIEF DESCRIPTION OF THE DRAWINGS

FIG. 1A is a side elevational view of a vehicle including a vehicle control system according to an embodiment;
FIG. 1B is a front elevational view of the vehicle;
FIG. 2 illustrates one example of a hardware configuration of an object recognition apparatus according to the embodiment;
FIG. 3 illustrates one example of a functional block configuration of the object recognition apparatus according to the embodiment;
FIG. 4 illustrates one example of a functional block configuration of a recognizing processing unit of the object recognition apparatus according to the embodiment;
FIG. 5 illustrates one example of a V-map generated from a disparity image;
FIG. 6 illustrates examples of a U-map generated from a disparity image;
FIGs. 7A and 7B illustrate examples of a real U-map generated from a U-map;
FIG. 8 illustrates a method of classifying object types;
FIG. 9 is a flowchart illustrating one example of a process of a clustering processing unit;
FIG. 10 illustrates a process of generating detection frames;
FIG. 11 is a flowchart illustrating one example of a road surface area estimating process;
FIGs. 12A-12C illustrate a labelling process;
FIG. 13 illustrates one example of thresholds for determining disparity point groups to be processed;
FIGs. 14A and 14B illustrate a process of calculating widths of disparity point groups branched into left and right portions;
FIG. 15 illustrates one example of thresholds for determining a processing type;
FIG. 16 illustrates one example of a method of determining a processing type;
FIG. 17 is a flowchart illustrating one example of an object area detecting process;
FIG. 18 is a flowchart illustrating one example of a road surface area removing process;
FIG. 19 illustrates a method of calculating an area value of an area where rectangles overlap; and
FIG. 20 illustrates a result of the road surface area removing process.

### DETAILED DESCRIPTION OF EMBODIMENTS

Below, using the accompanying drawings, the embodiments will be described in detail. The embodiments are examples where an object recognition apparatus 1, one example of an information processing apparatus, is installed in an automobile.

### (General configuration of vehicle having object recognition apparatus)

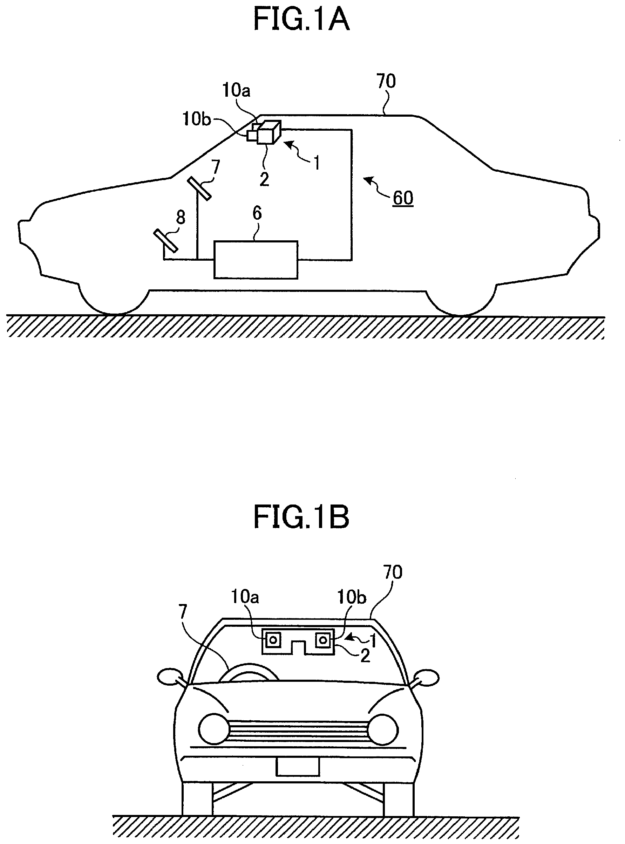

FIGs. 1A and 1B illustrate one example where a vehicle control system 60 according to an embodiment is installed in a vehicle 70. The vehicle 70 is one example of a moving object, and the vehicle control system 60 is one example of a moving object control system.

With reference to FIGs. 1A and 1B, the vehicle 70 in which the vehicle control system 60 according to the embodiment is installed will now be described. FIG. 1A is a side elevational view of the vehicle 70 including the vehicle control system 60, and FIG. 1B is a front elevational view of the vehicle 70.

As illustrated in FIGs. 1A and 1B, in the vehicle 70 that is an automobile, the vehicle control system 60 is installed. The vehicle control system 60 includes an object recognition apparatus 1 installed in a vehicle interior that is a space in the vehicle 70 accommodating occupants, a vehicle control apparatus 6, a steering wheel 7, and a brake pedal 8.

The object recognition apparatus 1 has a function of photographing the forward direction of the vehicle 70. For example, the object recognition apparatus 1 is installed on an inner surface of a windshield of the vehicle 70 near a rearview mirror. A configuration and operations of the object recognition apparatus 1 will be described later in detail.

The object recognition apparatus 1 includes a body unit 2, one example of a photographing apparatus, and photographing units 10a and 10b fixed to the body unit 2. The photographing units 10a and 10b are fixed to the body unit 2 in such a manner as to be able to photograph a photographing target in the forward direction of the vehicle 70.

The vehicle control apparatus 6, one example of a control unit, is an ECU (Electronic Control Unit) that carries out various vehicle control processes on the basis of recognition information received from the object recognition apparatus 1.

The vehicle control apparatus 6 carries out, as examples of vehicle control processes, a steering control process of controlling a steering system (a control target) including the steering wheel 7 to avoid a collision with an obstacle; and a brake control process of controlling the brake pedal 8 (a control target) to cause the vehicle 70 to reduce the traveling speed or to stop on the basis of recognition information received from the object recognition apparatus 1.

As a result of the steering control process, the brake control process, or the like being carried out in the vehicle control system 60 including the object recognition apparatus 1 and the vehicle control apparatus 6, it is possible to improve traveling safety of the vehicle 70.

Note that, as described above, the object recognition apparatus 1 photographs the forward direction of the vehicle 70. However, embodiments are not limited to this manner. For example, it is also possible that the object recognition apparatus 1 is installed in such a manner as to photograph the rearward direction or the sideward directions. In this case, the object recognition apparatus 1 can detect a subsequent vehicle or a pedestrian in the rearward direction, or another vehicle or a pedestrian in a sideward direction.

The vehicle control apparatus 6 thus predicts a hazard at a time of lane change or lane merging, to carry out the above-mentioned vehicle control processes. Also, at a time of rearward traveling for parking the vehicle 70, the vehicle control apparatus 6 can carry out the above-mentioned vehicle control processes on the basis of recognized information that is output from the object recognition apparatus 1 for a rearward obstacle for a case of having determined that there is a likelihood of a collision with the rearward obstacle.

### <Hardware configuration of object recognition apparatus>

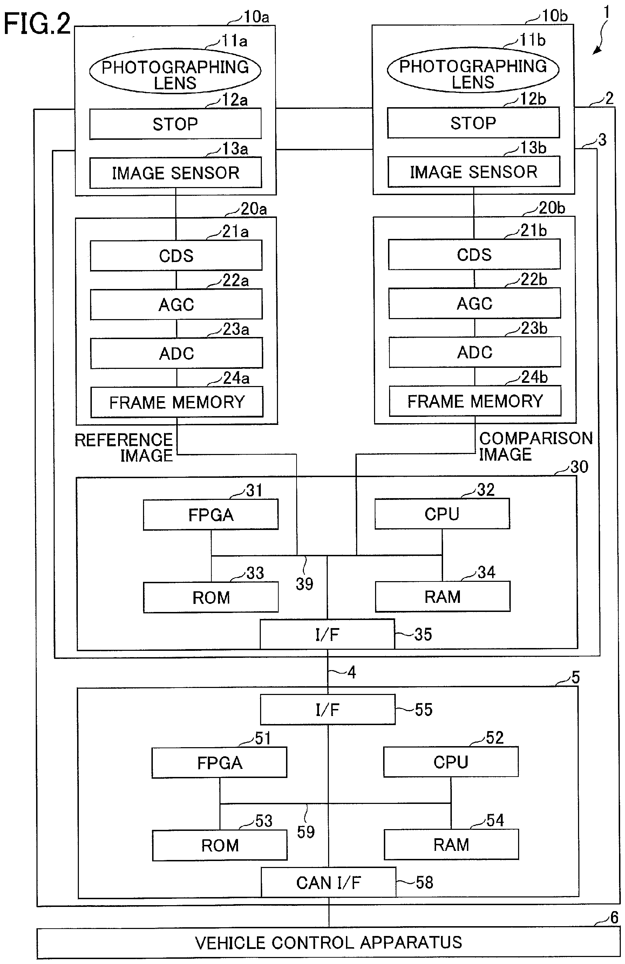

FIG. 2 illustrates one example of a hardware configuration of the object recognition apparatus 1 according to the embodiment. With reference to FIG. 2, the hardware configuration of the object recognition apparatus 1 will be described.

As illustrated in FIG. 2, the object recognition apparatus 1 includes a disparity value deriving unit 3 and a recognizing processing unit 5 inside the body unit 2.

The disparity value deriving unit 3 derives a disparity value dp representing disparity concerning an object E from a plurality of images acquired from photographing the object E, and outputs a disparity image that represents the disparity value dp for each pixel. The disparity image is one example of "information of a position in a vertical direction, a position in a horizontal direction, and a position in a depth direction which are associated with each other".

The recognizing processing unit 5 carries out an object recognizing process, and so forth, concerning an object such as a vehicle or a pedestrian appearing in a photographed image on the basis of the disparity image that is output from the disparity value deriving unit 3. Then, the recognizing processing unit 5 outputs recognition information that is a result of the object recognizing process to the vehicle control apparatus 6. Note that, hereinafter, the term "image" simply means a collection of information pieces that will be or will not be displayed on a display or the like.

As illustrated in FIG. 2, the disparity value deriving unit 3 includes the photographing unit 10a, the photographing unit 10b, a signal converting unit 20a, a signal converting unit 20b, and an image processing unit 30.

The photographing unit 10a photographs a photographing target in the forward direction, to output an analog image signal. The photographing unit 10a includes a photographing lens 11a, a stop 12a, and an image sensor 13a.

The photographing lens 11a refracts incident light to form an image of an object on the image sensor 13a. The stop 12a partially shuts off light that has passed through the photographing lens 11a, to adjust the light quantity that is input to the image sensor 13a. The image sensor 13a is a semiconductor device that converts light that has been incident on and has passed through the photographing lens 11a and has passed through the stop 12a, into an electric analog image signal. The image sensor 13a is implemented by, for example, a solid imaging device such as a CCD (Charge Coupled Device) or a CMOS (Complementary Metal Oxide Semiconductor).

The photographing unit 10b photographs a photographing target in the forward direction, to generate an analog image signal. The photographing unit 10b includes a photographing lens 11b, a stop 12b, and an image sensor 13b. The photographing lens 11b, the stop 12b, and the image sensor 13b have functions the same as or similar to the functions of the photographing lens 11a, the stop 12a, and the image sensor 13a described above. The photographing lens 11a and the photographing lens 11b are installed in such a manner that the respective lens surfaces of the right camera (i.e., the photographing unit 10a) and the left camera (i.e., the photographing unit 10b) are on the same plane so as to be able to carry out photographing operations under the same conditions.

The signal converting unit 20a converts the analog image signal generated by the photographing unit 10a into digital image data. The signal converting unit 20a includes a CDS (Correlated Double Sampling) circuit 21a, an AGC (Auto Gain Control) circuit 22a, an ADC (Analog Digital Converter) 23a, and a frame memory 24a.

The CDS circuit 21a removes noise from the analog image signal generated by the image sensor 13a using a correlated double sampling circuit, a traverse differential filter, a longitudinal smoothing filter or the like. The AGC circuit 22a carries out gain control to control the intensity of the analog image signal from which the CDS circuit 21a has removed noise. The ADC 23a converts the analog image signal for which the AGC circuit 22a has carried out gain control into digital image data. The frame memory 24a stores the image data that is output from the ADC 23a.

The signal converting unit 20b converts the analog image signal generated by the photographing unit 10b into digital image data. The signal converting unit 20b includes a CDS (Correlated Double Sampling) circuit 21b, an AGC (Auto Gain Control) circuit 22b, an ADC (Analog Digital Converter) 23b, and a frame memory 24b. The CDS circuit 21b, the AGC circuit 22b, the ADC 23b, and the frame memory 24b have functions the same as or similar to the functions of the CDS circuit 21a, the AGC circuit 22a, the ADC 23a, and the frame memory 24a described above.

The image processing unit 30 carries out image processing on the image data that is output by the signal converting unit 20a, and carries out image processing on the image data that is output by the signal converting unit 20b. The image processing unit 30 includes a FPGA (Field Programmable Gate Array) 31, a CPU (Central Processing Unit) 32, a ROM (Read-Only Memory) 33, a RAM (Random Access Memory) 34, an I/F (InterFace) 35, and a bus line 39.

The FPGA 31 is an integrated circuit, and carries out a process of deriving a disparity value dp in an image based on image data. The CPU 32 controls the functions of the disparity value deriving unit 3. The ROM 33 stores an image processing program to be executed by the CPU 32 to control the functions of the disparity value deriving unit 3. The RAM 34 is used as a work area of the CPU 32. The I/F 35 is an interface used for carrying out communications with an I/F 55 of the recognizing processing unit 5 via a communications line 4. The bus line 39 includes an address bus, a data bus, and so forth, and connects the FPGA 31, the CPU 32, the ROM 33, the RAM 34, and the I/F 35 as illustrated in FIG. 2 so that these circuits can carry out communications with each other, as illustrated in FIG. 2.

As described above, the image processing unit 30 includes the FPGA 31 as an integrated circuit used to derive disparity values dp. However, the image processing unit 30 is not limited to such a configuration. It is also possible that the image processing unit 30 includes another type of an integrated circuit such as an ASIC (Application Specific Integrated Circuit).

As illustrated in FIG. 2, the recognizing processing unit 5 includes a FPGA 51, a CPU 52, a ROM 53, a RAM 54, the I/F 55, a CAN (Controller Area Network) I/F 58, and a bus line 59.

The FPGA 51 is an integrated circuit, and carries out an object recognizing process for an object on the basis of the disparity image received from the image processing unit 30. The CPU 52 controls the functions of the recognizing processing unit 5. The ROM 53 stores an object recognizing processing program to be executed by the CPU 52 to carry out the object recognizing process of the recognizing processing unit 5. The RAM 54 is used as a work area of the CPU 52. The I/F 55 is an interface for implementing data communications with the I/F 35 of the image processing unit 30 via the communications line 4. The CAN I/F 58 is an interface for implementing communications with an external controller (for example, the vehicle control apparatus 6 illustrated in FIG. 2). The bus line 59 is connected to, for example, a CAN of the vehicle 70, or the like, and includes an address bus, a data bus, and so forth, to connect the FPGA 51, the CPU 52, the ROM 53, the RAM 54, the I/F 55, and the CAN I/F 58 in such a manner that these circuits can carry out communications with each other, as illustrated in FIG. 2.

In the above-mentioned configuration, in response to the disparity image being transmitted from the I/F 35 to the recognizing processing unit 5 via the communications line 4, the FPGA 51 carries out an object recognizing process for an object such as a pedestrian or a vehicle appearing in the photographed image on the basis of the disparity image, according to instructions sent from the CPU 52 of the recognizing processing unit 5.

The above-mentioned programs are installable or executable files, which may be recorded in computer-readable recording media and may be circulated. These recording media are CD-ROMs (Compact Disc Read-Only Memories), SD (Secure Digital) memory cards, or the like.

### <Configuration and operations of functional blocks of object recognition apparatus>

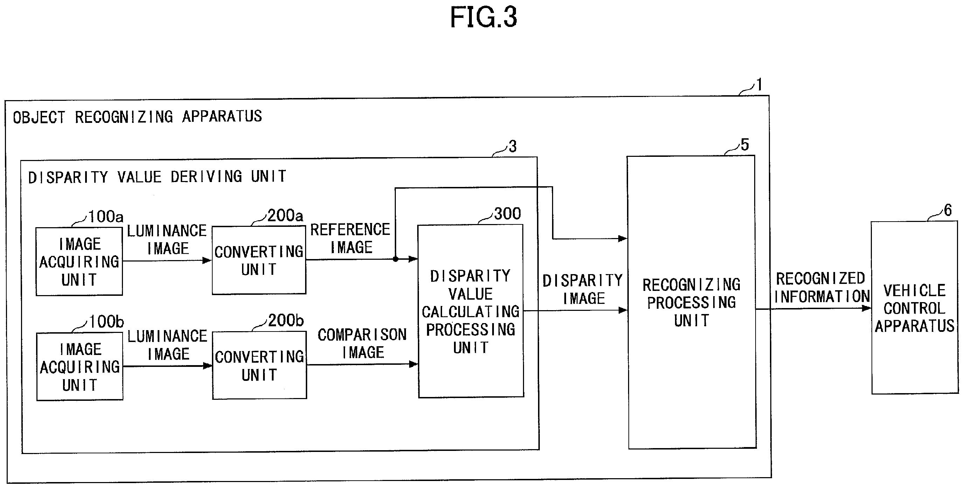

FIG. 3 illustrates one example of a functional block configuration of the object recognition apparatus 1 according to the embodiment. With reference to FIG. 3, a configuration and operations of functional blocks of the object recognition apparatus 1 will now be described.

As also described above with reference to FIG. 2, as illustrated in FIG. 3, the object recognition apparatus 1 includes the disparity value deriving unit 3 and the recognizing processing unit 5. The disparity value deriving unit 3 includes an image acquiring unit 100a (a first photographing means), an image acquiring unit 100b (a second photographing means), converting units 200a and 200b, and a disparity value calculating processing unit 300, one example of a generating unit.

At least some of the functional units of the object recognition apparatus 1 may be implemented by the FPGA 31 or the FPGA 51, or may be implemented as a result of a program being executed by the CPU 32 or the CPU 52.

The image acquiring unit 100a and the image acquiring unit 100b are respective functional units that acquire luminance images from images taken by the right camera (the photographing unit 10a) and the left camera (the photographing unit 10b).

The converting unit 200a is a functional unit that removes noise from the image data of the luminance image acquired by the image acquiring unit 100a, converts the noise-removed image data into digital image data, and outputs the digital image data. The converting unit 200a may be implemented by the signal converting unit 20a illustrated in FIG. 2.

The converting unit 200b is a functional unit that removes noise from the image data of the luminance image acquired by the image acquiring unit 100b, converts the noise-removed image data into digital image data, and outputs the digital image data. The converting unit 200b may be implemented by the signal converting unit 20b illustrated in FIG. 2.

Thus, the converting units 200a and 200b output respective sets of image data of the two luminance images. Hereinafter, the respective sets of image data of the two luminance images may be simply referred to as luminance images. The luminance image photographed by the image acquiring unit 100a that is the right camera (the photographing unit 10a) is used as image data of a reference image Ia. Hereinafter, the image data of the reference image Ia may be simply referred to as a reference image Ia. The luminance image photographed by the image acquiring unit 100b that is the left camera (the photographing unit 10b) is used as image data of a comparison image Ib. Hereinafter, the image data of the comparison image Ib will be simply referred to as a comparison image Ib. Thus, the converting units 200a and 200b output the reference image Ia and the comparison image Ib, respectively, on the basis of the two luminance images that are output from the image acquiring units 100a and 100b, respectively.

The disparity value calculating processing unit 300 derives the disparity values of the respective pixels of the reference image Ia on the basis of the reference image Ia and the comparison image Ib received from the converting units 200a and 200b, respectively, and generates a disparity image where the disparity values are associated with the respective pixels of the reference image Ia.

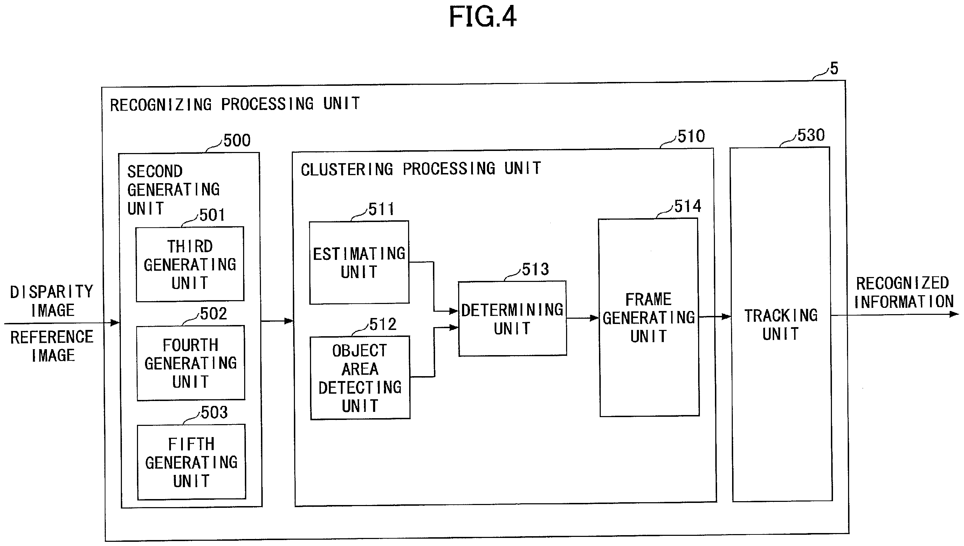

FIG. 4 illustrates one example of a functional block configuration of the recognizing processing unit 5 of the object recognition apparatus 1 according to the embodiment. With reference to FIG. 4, a configuration and operations of functional blocks of the recognizing processing unit 5 will now be described.

As illustrated in FIG. 4, the recognizing processing unit 5 includes a second generating unit 500, a clustering processing unit 510, and a tracking unit 530.

### <<Second generating unit 500>>

The second generating unit 500 is a functional unit that receives the disparity image from the disparity value calculating processing unit 300, and receives the reference image Ia from the disparity value deriving unit 3, to generate a V-disparity map, a U-disparity map, a real U-disparity map, and so forth. The V-disparity map is one example of "information of a position in a vertical direction and a position in a depth direction which are associated with each other".

Each of the U-disparity map and the real U-disparity map is one example of "information of a position in a horizontal direction and a position in a depth direction which are associated with each other".

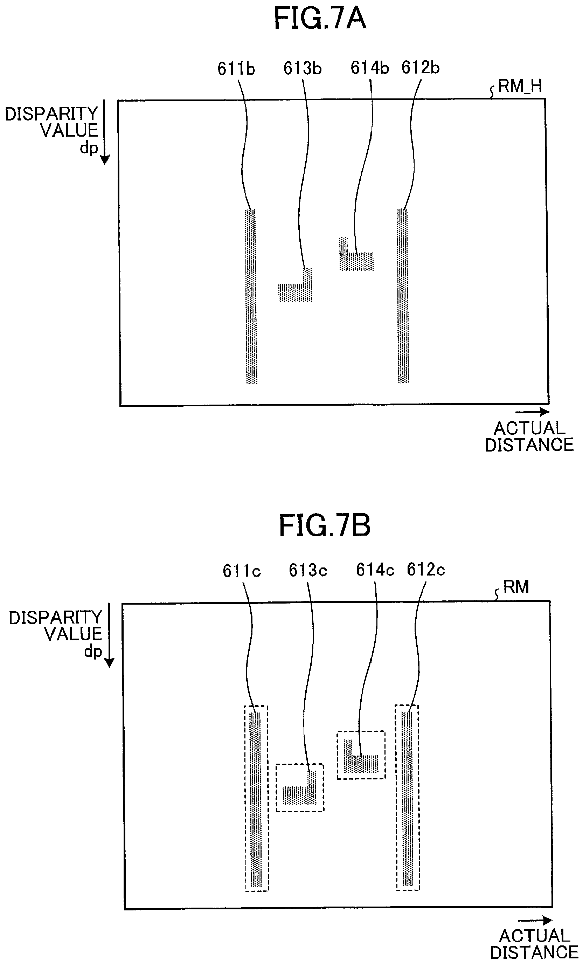

As illustrated in FIG. 4, the second generating unit 500 includes a third generating unit 501, one example of an object moving surface estimating unit, a fourth generating unit 502, and a fifth generating unit 503. With reference to FIGs. 4-7B, a configuration and operations of the second generating unit 500 of the recognizing processing unit 5 will now be described.

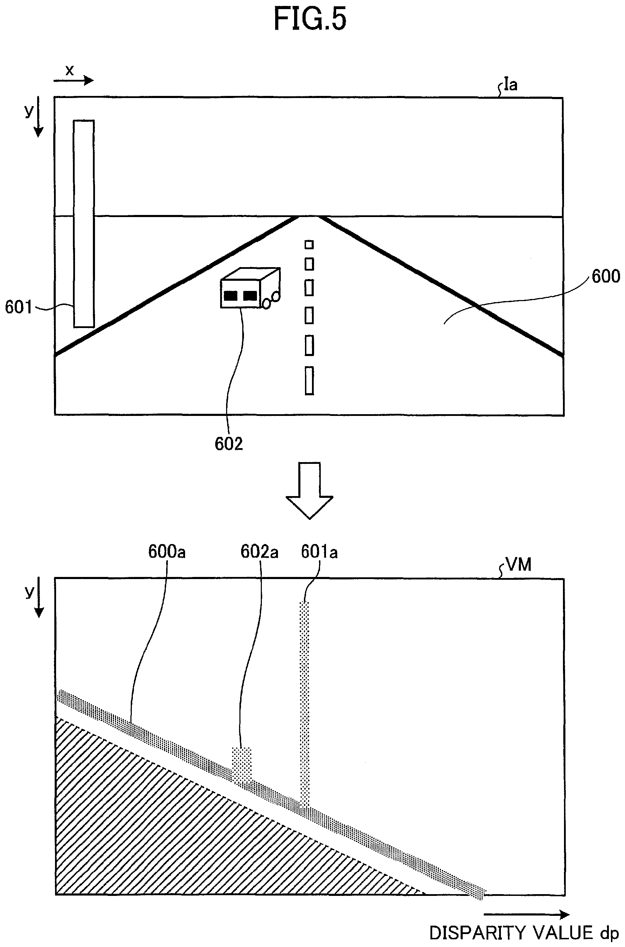

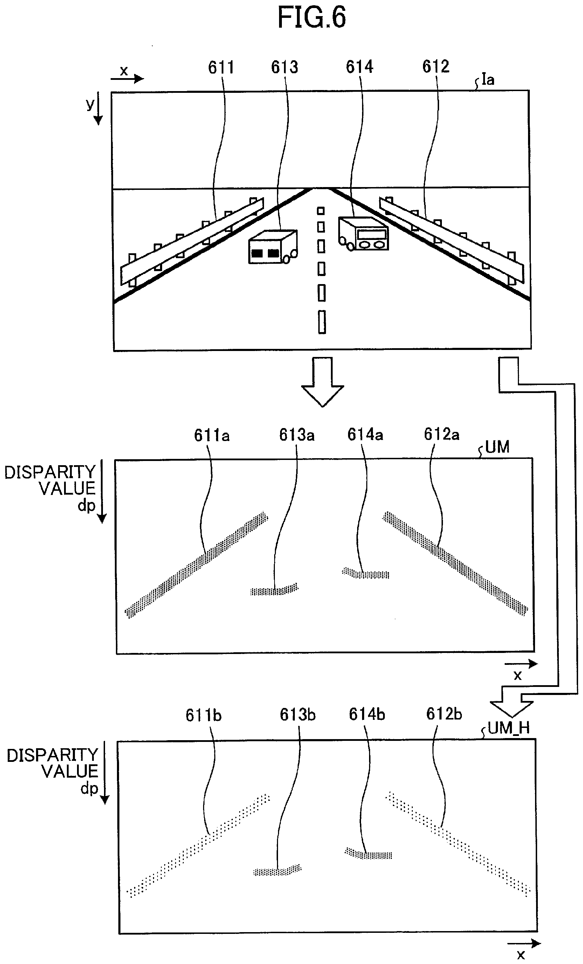

FIG. 5 illustrates one example of a V-map VM generated from a disparity image. FIG. 6 illustrates examples UM and UM_H of a U-map generated from a disparity image. FIGs. 7A and 7B illustrate respective examples RM_H and RM of a real U-map generated from a U-map.

The third generating unit 501 is a functional unit that generates a V-map VM that is a V-disparity map illustrated in FIG. 5 for detecting a road surface (one example of an object moving surface) from a disparity image received from the disparity value calculating processing unit 300. The V-disparity map is a two-dimensional histogram indicating the frequency distribution of the disparity values dp where the vertical axis corresponds to the y-axis (the vertical axis) of the reference image Ia such as an image illustrated in FIG. 5, and the horizontal axis corresponds to the disparity values dp in the disparity image or the depth-direction distances.

In the reference image Ia illustrated in FIG. 5, for example, a road surface 600, a power pole 601, and an automobile 602 appear. The road surface 600 in the reference image Ia corresponds to a road surface part 600a in the V-map VM; the power pole 601 corresponds to a power pole part 601a; and the automobile 602 corresponds to an automobile part 602a.

The third generating unit 501 carries out straight-line approximation on positions estimated as a road surface in the generated V-map VM. If the road surface is flat, it is possible to approximate the positions of the road surface with a single straight line. However, if the road surface has various gradients, a corresponding section in the V-map VM is divided to implement straight-line approximation with high accuracy.

In order to carry out straight-line approximation, the known Hough transform or a least squares method can be used. In the V-map VM illustrated in FIG. 5, the power pole part 601a and the automobile part 602a, which are the respective pixel blocks above the road surface part 600a, correspond to the power pole 601 and the automobile 602 that are respective objects on the road surface 600. At a time when the fourth generating unit 502 generates a U-disparity map as will be described later, only the information above the road surface is used for excluding noise.

By thus estimating the road surface, the height of the road surface is acquired. As a result, the heights of the objects above the road surface can be determined. A known method can be used to acquire the heights of the objects above the road surface.

For example, first, the V-map VM is converted into an image where the y-coordinates are converted into y-coordinates corresponding to actual heights. Then, the equation of a straight line expressing the estimated road surface is acquired. The y coordinate y0 corresponding to the disparity value dp = 0 is acquired as the height of the road surface. For example, for a case where the position of an object has the disparity value d and the y coordinate y', the value y' - y0 corresponds to the height of the object from the road surface assuming that, for example, the road surface is flat.

Then, the actual height H of the object from the road surface at the coordinates (d, y') can be acquired from the computing equation H = (z × (y' - y0))/f. There, the symbol "z" denotes the distance z = BF/(d - offset) calculated from the disparity value d. The symbol "f" denotes a value acquired from converting the focal length of the photographing units 10a and 10b into the same unit as the unit of (y' - y0). The symbol BF denotes a value acquired from multiplying the base length B of the photographing units 10a and 10b with the focal length f. The symbol "offset" denotes the disparity for a case where an object at an infinite distance is photographed.

The fourth generating unit 502 is a functional unit that generates a U-map UM (a U-disparity map or a second frequency image) illustrated in FIG. 6 for recognizing objects. The fourth generating unit 502 uses only information concerning objects above a road surface detected from a V-map VM, i.e., uses information of a disparity image corresponding to a left-hand guard rail 611, a right-hand guard rail 612, an automobile 613, and an automobile 614 appearing in a reference image Ia illustrated in FIG. 6, for example, to generate a U-map UM.

The U-map UM is a two-dimensional histogram indicating a frequency distribution of disparity values dp where the horizontal axis corresponds to the x-axis (the positions in the horizontal direction) of the reference image Ia, and the vertical axis corresponds to the disparity values dp or the depth-direction distances in the disparity image.

The left-hand guard rail 611 appearing in the reference image Ia illustrated in FIG. 6 corresponds to a left-hand guard rail part 611a in the U-map UM illustrated in FIG. 6. In the same way, the right-hand guard rail 612 corresponds to a right-hand guard rail part 612a; the automobile 613 corresponds to an automobile part 613a; and the automobile 614 corresponds to an automobile part 614a.

Also, the fourth generating unit 502 generates a height U-map UM_H (that is another example of a U-disparity map) illustrated in FIG. 6, for recognizing objects, with the use of only the information concerning the objects above the road surface detected from the V-map VM, i.e., with the use of the information of the disparity image corresponding to the left-hand guard rail 611, the right-hand guard rail 612, the automobile 613, and the automobile 614 appearing in the reference image Ia illustrated in FIG. 6, for example.

The height U-map UM_H is an image where the horizontal axis corresponds to the x-axis (the positions in the horizontal direction) of the reference image Ia, the vertical axis corresponds to the disparity values dp or the depth-direction distances in the disparity image, and the pixel values correspond to the heights of the objects from the road surface. As the heights of the objects, the greatest heights of the respective objects from the road surface are used in the height U-map UM_H.

The left-hand guard rail 611 appearing in the reference image Ia illustrated in FIG. 6 corresponds to a left-hand guard rail part 611b in the height U-map UM_H. In the same way, the right-hand guard rail 612 corresponds to a right-hand guard rail part 612b; the automobile 613 corresponds to the automobile part 613b; and the automobile 614 corresponds to the automobile part 614b.

The fifth generating unit 503 generates a real height U-map RM_H, which is one example of a real U-disparity map, where the horizontal axis has been converted into the actual distance, as illustrated in FIG. 7A, from the height U-map UM_H generated by the fourth generating unit 502.

Through a similar process, the fifth generating unit 503 generates a real U-map RM, which is another example of a real U-disparity map, where the horizontal axis has been converted into the actual distance, as illustrated in FIG. 7B, from the U-map UM generated by the fourth generating unit 502. This process is carried out for generating a bird's-eye map (a bird's-eye image) for the purpose that an object can be easily detected. Therefore, the horizontal axis need not be an actual distance, and may be a measurement at least corresponding to an actual distance.

The real height U-map RM_H and the real U-map RM are histograms where the horizontal axis indicates the actual distance in the direction (the horizontal direction) from the photographing unit 10b (the left camera) toward the photographing unit 10a (the right camera), and the vertical axis indicates the disparity values dp of the disparity image (or the depth-direction distances acquired from the disparity values dp being converted). The left-hand guard rail part 611b illustrated in the real height U-map RM_H of FIG. 7A corresponds to the left-hand guard rail part 611c in the real U-map RM of FIG. 7B. In the same way, the right-hand guard rail part 612b corresponds to the right-hand guard rail part 612c, the automobile part 613b corresponds to the automobile part 613c, and the automobile part 614b corresponds to the automobile part 614c.

Thus, the fifth generating unit 503 generates the real height U-map RM_H and the real U-map RM that are bird's eye images. In this regard, in the real height U-map RM_H and the real U-map RM, the fifth generating unit 503 does not thin out pixels for a distant location (where the disparity value dp is smaller). This is because, at a distant location, an object appears with a smaller size, therefore the information amount of the disparity information is smaller, and the resolution of the distance value is lower.

Conversely, in the real height U-map RM_H and the real U-map RM, the fifth generating unit 503 thins out pixels for a near location (where the disparity value dp is greater). This is because, at a near location, an object appears with a greater size, therefore the information amount of the disparity information is greater, and the resolution of the distance value is greater.

As will be described later, it is possible to extract a pixel block (an object area) from the real height U-map RM_H or the real U-map RM. In this case, the width of each of rectangles (see rectangular blocks drawn by broken lines illustrated in fig 7B) surrounding the respective pixel blocks corresponds to the width of the extracted object, and the height corresponds to the depth of the extracted object.

An actual method of generating the real height U-map RM_H by the fifth generating unit 503 is not limited to the above-mentioned method using the height U-map UM_H. It is also possible that the fifth generating unit 503 generates the real height U-map RM_H directly from the disparity image.

The second generating unit 500 can determine the position and width (i.e., xmin and xmax) of an object in the x-axis direction in the disparity image and the reference image Ia, from the generated height U-map UM_H or real height U-map RM_H. Also, the second generating unit 500 can acquire the actual depth of the object from the horizontal-axis information (i.e., dmin and dmax) of the height U-map UM_H or the real height U-map RM_H.

Also, the second generating unit 500 can determine the position and height of the object (i.e., ymin: "the y coordinate corresponding to the greatest height of the object from the road surface at the position at which the object has the greatest disparity value", and ymax: "the y coordinate indicating the height of the road surface at the position at which the greatest disparity value of the object is acquired") in the y-axis direction in the disparity image and the reference image Ia, from the generated V-map VM.

Also, the second generating unit 500 can determine the actual size of the object in the x-axis direction and in the y-axis direction from the width (i.e., xmin and xmax) of the object in the x-axis direction, the height (i.e., ymin and ymax) of the object in the y-axis direction, and the corresponding disparity values dp determined from the disparity images.

Thus, the second generating unit 500 uses the V-map VM, the height U-map UM_H, and the real height U-map RM_H, to determine the position, the actual width, height, and depth of an object appearing in the reference image Ia. Thus, the second generating unit 500 can determine the position of an object appearing in the reference image Ia, and therefore, the second generating unit 500 can determine the position of the object in the disparity image, and can determine the distance to the object.

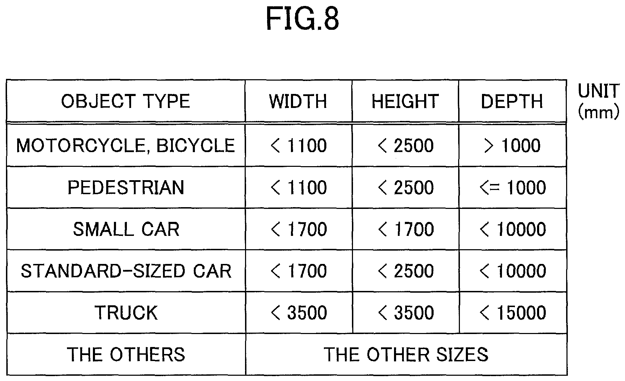

FIG. 8 illustrates a method of determining an object type. The second generating unit 500 can determine the type of an object (an object type) with the use of the thus determined actual size of the object (the width, the height, and the depth) with reference to a table such as that illustrated in FIG. 8. For example, if an object has a width 1300 mm, a height 1800 mm, and a depth 2000 mm, the object can be determined as a "standard-size car". For this purpose, information such as a table illustrated in FIG. 8 where widths, heights, depths, and object types are associated together may be stored in the RAM 54, or the like.

### <<Clustering processing unit 510>>

The clustering processing unit 510 illustrated in FIG. 4 is a functional unit of detecting an object such as a vehicle on the basis of each map that is input by the second generating unit 500. As illustrated in FIG. 4, the clustering processing unit 510 includes an estimating unit 511, an object area detecting unit 512 (one example of a detecting unit), a determining unit 513, and a frame generating unit 514.

The estimating unit 511 estimates an area that has a disparity corresponding to a road surface from a U-disparity map or a real U-disparity map. The reason why the estimating unit 511 thus carries out estimation is that there may be a case where the accuracy of detecting a road surface by the third generating unit 501 with the use of the V-map VM is not sufficiently high.

Hereinafter, an example where the estimating unit 511 carries out the estimation with the use of a small real U-map acquired from reducing the size of a real U-disparity map by, for example, thinning out pixels will be described. However, it is also possible that the estimating unit 511 carries out the estimation with the use of a real U-disparity map.

In this regard, because a real U-disparity map is acquired from converting the x coordinates in a U-disparity map into the actual distance in the horizontal direction or the like, it is also possible that the estimating unit 511 carries out the estimation with the use of a U-disparity map. In this case, for example, it is possible that the estimating unit 511 carries out the process of converting the x coordinates in a U-disparity map into the actual distance in the horizontal direction or the like.

On the basis of a U-disparity map or a real U-disparity map, the object area detecting unit 512 detects the depth, the width, and so forth of an object such as a vehicle above a road surface that is detected by the third generating unit 501 on the basis of a V-map VM. Below, description will be made for an example where the object area detecting unit 512 uses a real U-disparity map, to carry out the detection. However, it is also possible that the object area detecting unit 512 uses a U-disparity map, to carry out the detection. In this case, it is possible that, for example, the object area detecting unit 512 carries out a process of converting the x coordinates in the U-disparity map into the actual distance in the horizontal direction or the like.

The determining unit 513 determines an object that is a road surface with the use of the estimation result of the estimating unit 511, from among the objects detected by the object area detecting unit 512. Then, the determining unit 513 removes the object that is thus determined as a road surface from among the objects detected by the object area detecting unit 512. The process that the determining unit 513 removes an object means a process that the determining unit 513 excludes the object from being processed in a subsequent process (for example, a tracking process) by, for example, setting a "remove flag" for the object.

The frame generating unit 514 generates a detection frame for each of areas (recognized areas) in a disparity image Ip (or a reference image Ia) corresponding to objects other than the object determined as a road surface from among the objects detected by the object area detecting unit 512. The term "detection frame" represents a position and a size of a recognized object. For example, a detection frame is information where the coordinates of the corners, the height, and the width of a rectangle that surrounds the object are associated together. The frame generating unit 514 outputs the generated detection frames to the tracking unit 530.

### ≪tracking unit 530≫

The tracking unit 530 is a functional unit of carrying out a tracking process of tracking an object on the basis of recognized area information that is information concerning the object recognized by the clustering processing unit 510. The term "recognized area information" means information concerning an object recognized by the clustering processing unit 510. For example, recognized area information includes the position and the size of a recognized object in a V-disparity map, a U-disparity map, a real U-disparity map, or the like, an identification number concerning a labelling process that will be described later, the above-described remove flag, and so forth.

### <Process>

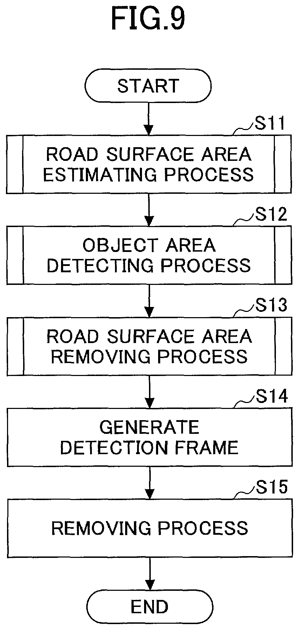

Next, with reference to FIG. 9, a process of the clustering processing unit 510 will be described. FIG. 9 is a flowchart illustrating one example of a process of the clustering processing unit 510.

In step S11, the estimating unit 511 of the clustering processing unit 510 carries out a road surface area estimating process. The road surface area estimating process will be described later in detail.

Next, the object area detecting unit 512 of the clustering processing unit 510 carries out an object area detecting process (step S12). The "road surface area estimating process" and the "object area detecting process" may be carried out in parallel, or either one of the "road surface area estimating process" and the "object area detecting process" may be carried out first. The object area detecting process will be described later in detail.

Next, the determining unit 513 of clustering processing unit 510 carries out a road surface area removing process (step S13). The road surface area removing process will be described later in detail.

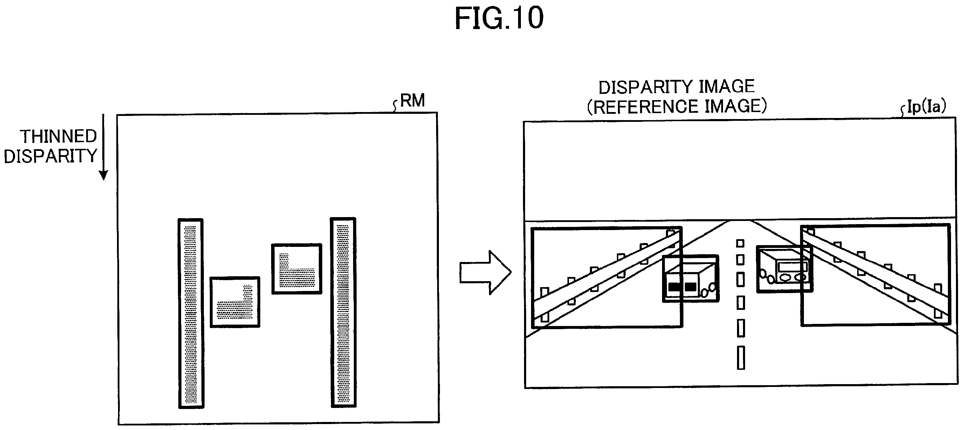

Next, the frame generating unit 514 of the clustering processing unit 510 generates a detection frame (step S14). FIG. 10 illustrates a process of generating detection frames. Using an object area that has been detected through the object area detecting process and that has not been removed through the road surface area removing process, as illustrated in FIG. 10, a detection frame is generated for an area (a recognized area) corresponding to an object area in a disparity image Ip (or a reference image Ia).

Next, the determining unit 513 of the clustering processing unit 510 carries out a removing process (step S15). For example, in the removing process of step S15, it is possible that the objects that are classified as "THE OTHERS" in FIG. 8 in the object type classifying method illustrated in FIG. 8 from among the detected objects are removed.

### ≪Road surface area estimating process≫

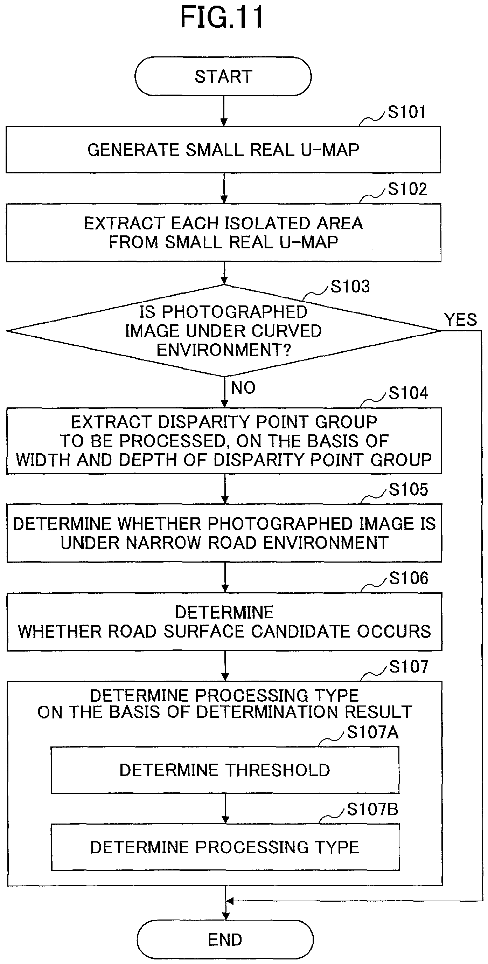

Next, with reference to FIG. 11, the road surface area estimating process of step S11 of FIG. 9 by the estimating unit 511 will be described. FIG. 11 is a flowchart illustrating one example of the road surface area estimating process.

In step S101, the estimating unit 511 generates a small real U-map that is an image acquired from thinning out pixels from a real U-map RM generated by the fifth generating unit 503. In this regard, it is also possible that the small real U-map is generated by the fifth generating unit 503.

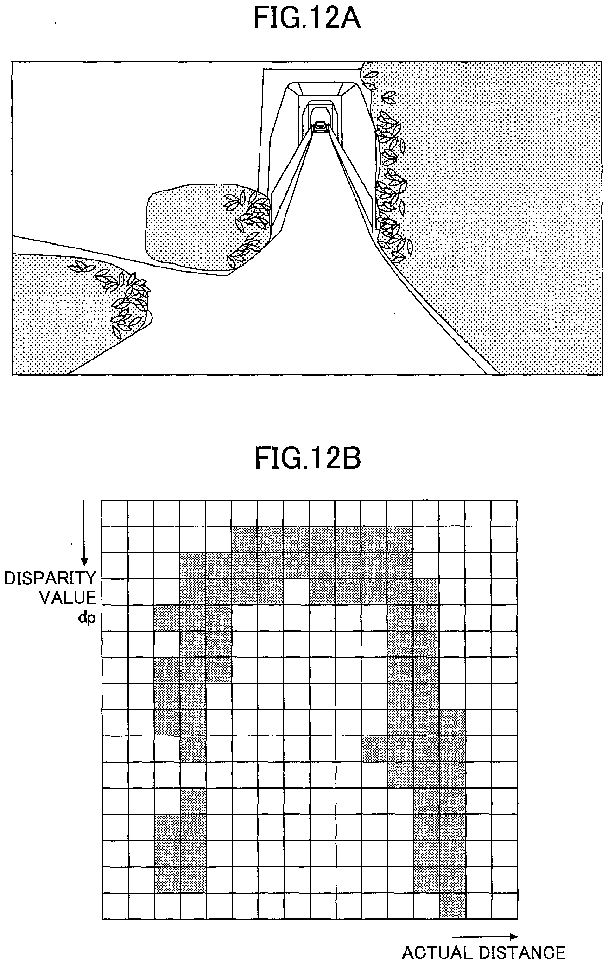

With reference to FIGs. 12A-12C, a small real U-map will now be described. FIGs. 12A-12C illustrate a labelling process. FIG. 12A illustrates one example of a reference image Ia. FIG. 12B illustrates one example of a small real U-map for a case where the reference image Ia is an image illustrated in FIG. 12A. It is possible that, as a result of pixels being thinned out from a real U-map RM in such a manner that the width of one pixel corresponds to, for example, a distance on the order of 10 cm, a small real U-map is generated. By using such a small real U-map having a smaller number of pixels than a real U-map RM, it is possible to carry out a process of roughly detecting objects in the forward direction of a vehicle, at a high speed.

Next, the estimating unit 511 carries out a 4-neighborhood labelling process where, in the small real U-map, the same IDs are given to pixels (the disparity points) adjacent in the vertical directions (the depth directions) and in the horizontal directions, each of the pixels having a pixel value (a disparity frequency) greater than or equal to a predetermined value (for example, "1") (step S102). As the 4-neighborhood labelling process, a known method can be used.

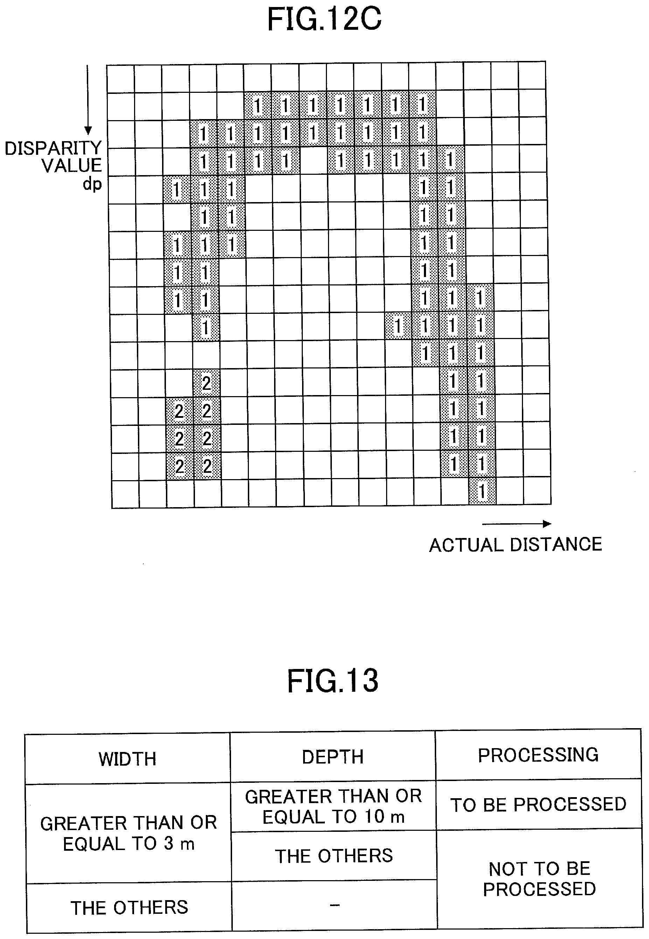

FIG. 12C illustrates an example where IDs are given to disparity points in the small real U-map. In FIG. 12C, IDs ("1" or "2") are given to the disparity points adjacent in the vertical direction and in the horizontal direction in the small real U-map of FIG. 12B. An area where the respective pixels of each disparity point group to which the same IDs have been given are present may be referred to as an "isolated area (an object candidate)".

Next, the estimating unit 511 determines whether the currently photographed image relates to a curved environment (step S103). An example of a case for which the estimating unit 511 can determine that the currently photographed image relates to a curved environment will now be described.

That is, in the small real U-map, first, the left and right ends and the midpoint between the left and right ends are detected for each horizontal row of pixels included in each disparity point group (each isolated area) where the same IDs have been given to the pixels in step S102. Then, it is determined whether the difference in the average positions of the midpoints between a nearer zone and a farther zone is greater than or equal to a threshold, and it is determined whether the varying direction of the left ends and the varying direction of the right ends along the depth direction are the same as one another. For a case where both the determination results are affirmative, the estimating unit 511 determines that the currently photographed image relates to a curved environment, in this example.

In this regard, for a case where a plurality of the isolated areas occur in the currently photographed image, the estimating unit 511 can determine whether the currently photographed image relates to a curved environment in consideration of the respective determination results concerning the isolated areas comprehensively, for example.

It is also possible that the estimating unit 511 determines that the currently photographed image relates to a curved environment for a case where, in the small real U-map, image processing is carried out on the currently photographed image to recognize a white line that separates lanes, for example, and the curving degree of the detected white line is greater than or equal to a threshold. It is also possible that the estimating unit 511 determines that the currently photographed image relates to a curved environment on the basis of the steering angle of the steering wheel acquired from an ECU of the vehicle.

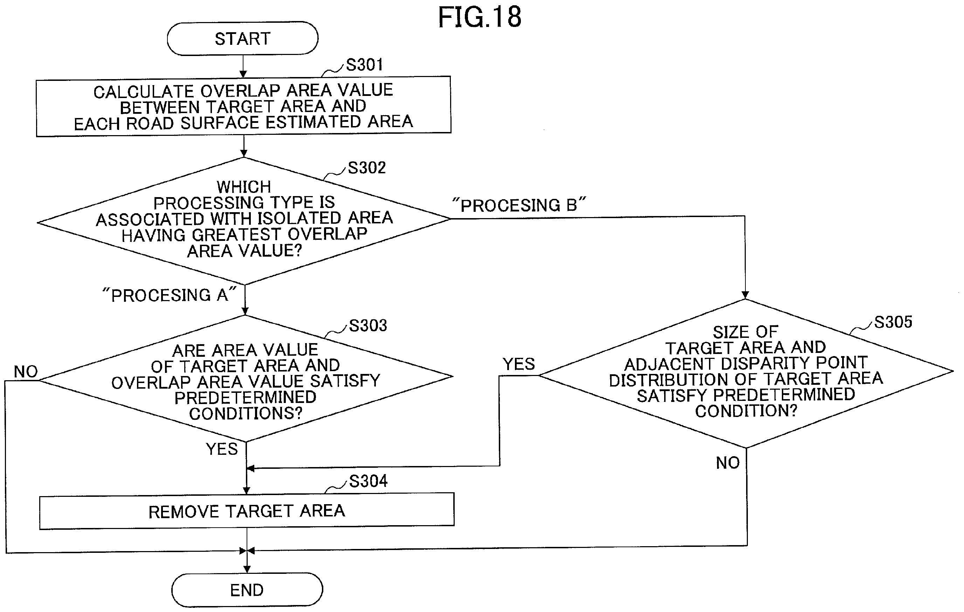

When the currently photographed image relates to a curved environment (YES in step S103), the process ends. Also, in the current process of the clustering processing unit 510 of FIG. 9, the road surface area removing process (step S13) will be skipped. This is because when the currently photographed image relates to a curved environment, the remaining process of the road surface area estimating process (step S11 illustrated in FIG. 11) and the entirety of the road surface area removing process (step S13 illustrated in FIG. 18) may be inadequate for the currently photographed image.

When the currently photographed image does not relate to a curved environment (NO in step S103), the estimating unit 511 extracts one or more disparity point groups to be processed, from the disparity point groups in each of which the same IDs have been given to the pixels, on the basis of the widths and the depths of the disparity point groups (step S104). Note that steps S104-S110 are carried out for each isolated area. FIG. 13 illustrates one example of thresholds to be used to thus extract disparity point groups to be processed.

As illustrated in FIG. 13, for example, a disparity point group having the width (the length in the horizontal direction) greater than or equal to an amount corresponding to one lane (for example, 3 m), and the depth greater than or equal to a predetermined value (for example, 10 m) is extracted as a disparity point group to be processed.

Each of the disparity point groups thus extracted to be processed will be processed in the road surface area removing process (step S13 illustrated in FIG. 18) of determining whether the disparity point group corresponds to a road surface. To the contrary, the disparity point groups that have not been extracted in step S104 will be removed from being further processed in the road surface estimating process of FIG. 11, and also, will be removed from being processed in the road surface area removing process (step S13).

A disparity point group having the width greater than or equal to, for example, 3 m, and the depth greater than or equal to, for example, 10 m is too large to be an object such as a vehicle. Therefore, such a disparity point group can be estimated as an object other than a vehicle, and can be estimated as a road surface, or the like.

In more detail, it will now be assumed that a vehicle or the like having the depth, for example, greater than or equal to 10 m occurs in the forward direction. This is because a vehicle or the like has a back face and a side face each extending approximately upright with respect to a road surface, and the body of the vehicle or the like extending from the back face and the side face is not photographed. Therefore, there is a very small likelihood that, in a bird's eye image such as a small real U-map, a vehicle or the like having such a depth is detected. Therefore, as mentioned above, an isolated area having the width greater than or equal to 3 m and the depth greater than or equal to 10 m, for example, is extracted as a disparity point group to be processed.

Next, the estimating unit 511 determines whether the currently photographed image relates to a narrow road environment (step S105). One example of a case for which the estimating unit 511 can determine that the currently photographed image relates to a narrow road environment will now be described. That is, first, a rectangle that circumscribes each disparity point group where the same IDs have been given to the pixels is generated. Then, it is determined whether each of the respective depths of the two areas acquired from dividing the rectangle in such a manner that the rectangle is divided by a centerline between the left and right ends of the rectangle is greater than or equal to a predetermined value. For a case where the determination result is affirmative, the estimating unit 511 determines that the currently photographed image relates to a narrow road environment, in this example.

This is because, in a case of a narrow road, in many cases, disparity points corresponding to roadside objects such as plants are joined to disparity points corresponding to a road surface that, for example, slopes upward in the forward direction (i.e., these disparity points are given the same IDs) in a bird's eye image such as a small real U-map. In such a case, a road surface may be erroneously detected as an object other than a road surface.

In such a case of a narrow road where a road surface may be erroneously determined as an object other than a road surface easily, a disparity point group where the same IDs have been given to the pixels may have a horseshoe shape (or a U-shape) in a bird's eye image such as a small real U-map as illustrated in FIG. 12B. In order to detect such a horseshoe shape (or a U-shape), the above-mentioned determination method of dividing a rectangle that circumscribes each disparity point group at a centerline between the left and right ends of the rectangle, and using the respective depths of the two areas acquired from dividing the rectangle is advantageous.

Note that the expression "narrow road" is one example, and the determination in step S105 is used widely for an environment where the width of a location where a vehicle is traveling is narrow and objects such as plants occur in a row at each of the left and right sides.

Next, the estimating unit 511 determines whether each disparity point group is a road surface candidate (whether there are road surface candidates). In more detail, for each disparity point group where the same IDs have been given to the pixels, the estimating unit 511 calculates the horizontal dimension of the consecutive disparity points that have a horizontal dimension greater than or equal to a predetermined value. Then, the disparity point groups each having a large horizontal dimension with respect to a predetermined amount are determined as road surface candidates (step S106).

This is because, it can be considered that, in a case where disparity corresponding to a road surface appears in a real U-map, the disparity appears as an area that has a width on the order of a certain amount and continues also in the depth direction, or the disparity appears as an area having a remarkably great width. Therefore, in step S106, the estimating unit 511 extracts only disparity point groups each continuing horizontally on the order of a certain amount (i.e., extracts only isolated areas each extending in a horizontal direction on the order of a certain amount), and thus, uses such determination conditions to determine whether a disparity point group is a road surface candidate.

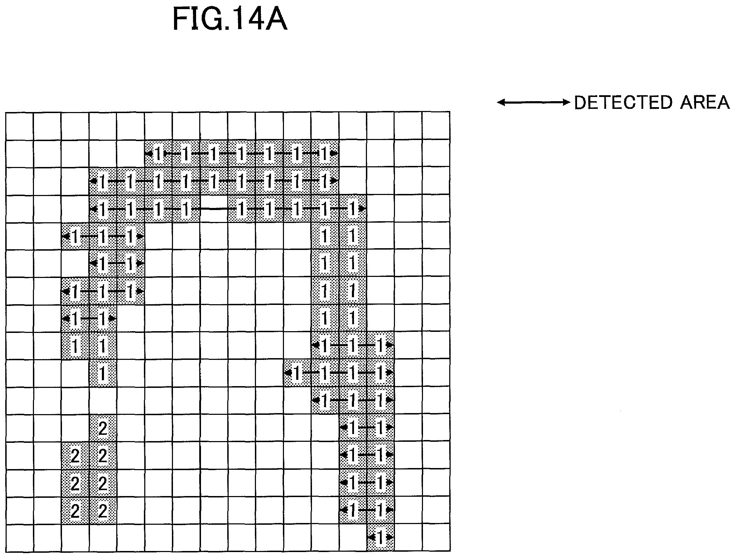

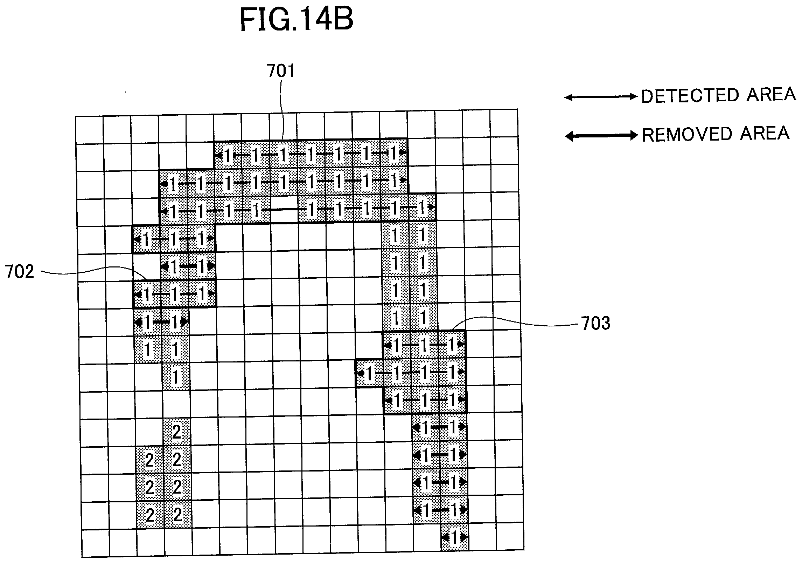

Step S106 will be described in yet more detail with reference to FIGs. 14A and 14B. FIGs. 14A and 14B illustrate a process of calculating widths of disparity point groups branched into left and right portions. For example, as illustrated in FIG. 14A, in each disparity point group in a small real U-map, the estimating unit 511 extracts a horizontal consecutive disparity point row extending for the greatest amount. At this time, for example, even if a break of less than or equal to a predetermined amount (for example, less than or equal to 1 pixel) occurs in a horizontal disparity point row, the horizontal disparity point row is regarded as consecutive because there is a likelihood that such a break occurs due to noise.

Next, the estimating unit 511 removes the horizontal disparity point rows each having a width (a length in the horizontal direction) smaller than or equal to a predetermined value (for example, corresponding to two pixels) from among the extracted horizontal disparity point rows, as illustrated in FIG. 14B. Then, from among the remaining horizontal disparity point rows, horizontal disparity point rows consecutive in the vertical direction are collected together to belong to a single common group.

Next, as illustrated in FIG. 14B, the same IDs 701, 702, or 703 are given to each of the thus acquired groups 701, 702, and 703. Next, for each of the groups 701, 702, and 703, the average of the widths is calculated. For a case where any one of the calculated averages is greater than or equal to a predetermined threshold, the estimating unit 511 can determine that a road surface candidate occurs in the currently photographed image, for example.

Next, in step S107, the estimating unit 511 determines a processing type concerning a road surface area removing process (that will be described later with reference to FIG. 18) on the basis of whether the currently photographed image relates to a narrow road (determined in step S105) and of whether a road surface candidate occurs in the currently photographed image (determined in step S106).

Thus, a processing type concerning the road surface area removing process is determined on the basis of the shapes of the isolated areas determined as object candidates. As a result, it is possible to prevent a road surface from being erroneously detected as an object other than a road surface, and it is thus possible to remove a road surface more accurately, and therefore, it is possible to prevent a road surface from being further processed as an object other than a road surface.

Determination of a processing type in step S107 on the basis of determination results includes determination of thresholds to be used to determine a processing type (step S107A), and determination of a processing type for each isolated area on the basis of the thus determined thresholds (step S107B).

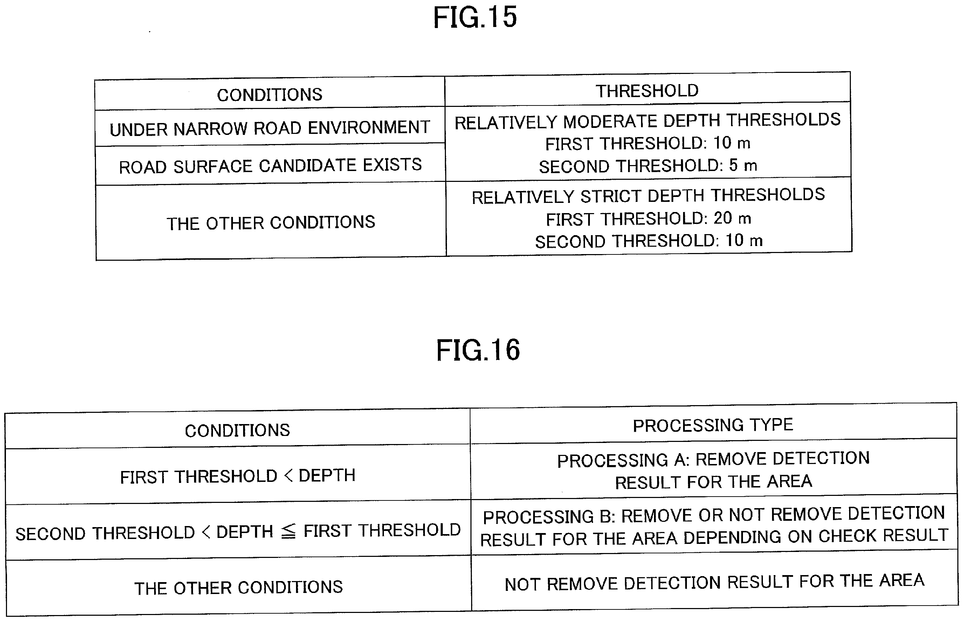

FIG. 15 illustrates one example of thresholds to be used to determine a processing type. For a case where at least it is determined in step S105 that "the currently photographed image relates to a narrow road environment" or it is determined in S106 that "a road surface candidate occurs in the currently photographed image", relatively moderate depth thresholds are selected. The relatively moderate depth thresholds include a first threshold 10 m and a second threshold 5 m.

For a case where it is determined in step S105 that the currently photographed image does not relate to a narrow road environment and it is determined in S106 that a road surface candidate does not occur in the currently photographed image, relatively strict depth thresholds are selected. The relatively strict depth thresholds include a first threshold 20 m and a second threshold 10 m.

In a case where the currently photographed image relates to a narrow road environment or a road surface candidate occurs in the currently photographed image, a likelihood that disparity corresponding to a road surface appears in the real U-map is high. Therefore, the relatively moderate depth thresholds are used. As a result, a processing type such that a processing result of an "object area detecting process" (described later in detail) can be easily removed (i.e., an object area is easily detected as a road surface and therefore, can be easily removed from being further processed) is selected.

Thus, for a case where a U-shape that protrudes in the depth direction appears in a bird's eye image as illustrated in FIG. 12B, it is determined that the currently photographed image relates to a narrow road in step S105, and as a result, relatively moderate (small) thresholds are selected as illustrated in FIG. 15. Thus, it is possible to find a case where a road surface is erroneously extracted, and it is possible to remove the road surface from being further processed.

Also, in a case where a shape having a width greater than or equal to a certain amount occurs, a likelihood that a road surface has been erroneously detected as an object other than a road surface is high. Therefore, in such a case, the shape is determined as a road surface candidate in step S106, and relatively moderate (small) thresholds are selected as illustrate in FIG. 15. Thus, it is possible to find such a case where a road surface is erroneously extracted, and it is possible to remove the road surface from being further processed.

For the other cases, i.e., for a case where a U-shape that protrudes in the depth direction does not appear and a shape having a width greater than or equal to the certain amount does not occur, a likelihood that a detected object is not a road surface is high. Therefore, by selecting relatively strict (great) thresholds as illustrated in FIG. 15, it is possible to avoid an erroneous determination of estimating only an object that extends continuously in the depth direction for a relatively great amount as a road surface.

Note that, according to the present embodiment described above, in order to determine a case for which a road surface may be erroneously detected as an object other than a road surface easily, two types of determination as to whether a currently photographed image relates to a narrow road environment and determination as to whether a road surface candidate occurs in the currently photographed image are used. However, it is also possible that only one type of determination as to whether a currently photographed image relates to a narrow road environment or determination as to whether a road surface candidate occurs in the currently photographed image is used to determine a case for which a road surface may be erroneously detected as an object other than a road surface easily.

After the thresholds are thus determined according to FIG. 15 in step S107A, the estimating unit 511 determines in step S107B a processing type to be used for each isolated area on the basis of the thus determined thresholds. FIG. 16 illustrates one example of determining a processing type.

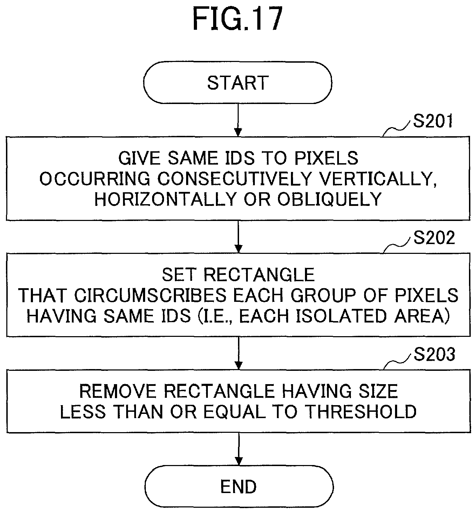

In a case where the depth of a disparity point group where the same IDs have been given to the pixels in step S102 is greater than the first threshold determined according to FIG. 15 in step S107A, this means that a corresponding object very long in the depth direction has been detected, and a likelihood that the object is a road surface is high. Therefore, according to FIG. 16, the estimating unit 511 determines to select a processing type (hereinafter, referred to as "processing A") such that, for the area of the disparity point group, the processing result of the object area detecting process of FIG. 17 will be removed from being further processed without a check of the processing result. By thus removing the processing result without the check, it is possible to achieve a reduction in the processing time.

In a case where the depth of a disparity point group where the same IDs have been given to the pixels in step S102 is greater than the second threshold determined in step S107A and less than or equal to the first threshold determined in step S107A, this means that there is a likelihood that the corresponding object somewhat long in the depth direction is not a road surface. Therefore, according to FIG. 16, the estimating unit 511 determines to select a processing type (hereinafter, referred to as "processing B") such that, for the area of the disparity point group, the processing result of the object area detecting process of FIG. 17 will be checked. In this case, although a longer processing time is taken than the processing A due to the check of the processing result, it is possible to determine, with high accuracy, whether the object is a road surface to be removed from being further processed.

Thus, by selecting the thresholds of one type (i.e., the relatively moderate depth thresholds or the relatively strict depth thresholds) and selecting a different process using the selected thresholds, it is possible to select a suitable process depending on a likelihood as to whether a road surface has been erroneously detected as an object other than a road surface. Note that it is desirable to select one of the processing A and the processing B as mentioned above. However, depending on a purpose, it is also possible that whether to use the processing A or the processing B is previously determined and does not depend on conditions.

### «Object area detecting process»

Next, with reference to FIG. 17, the object area detecting process in step S12 of FIG. 9 carried out by the object area detecting unit 512 will be described. FIG. 17 is a flowchart illustrating one example of the object area detecting process.

Below, an example where an object area is extracted from a real height U-map RM_H will be described. However, it is also possible that, through the same process as will now be described, an object area is extracted from a real U-map RM. In this case, an object area can be extracted with the use of disparity points having heights from a road surface greater than or equal to a predetermined value from among the disparity points included in a real U-map RM. It is also possible to carry out the same process as will now be described with the use of any type of information (a bird's eye image) in which horizontal positions are associated with depth-direction positions.

In step S201, the object area detecting unit 512 carries out a 8-neighborhood labelling process of giving the same IDs to the pixels adjacent in the vertical directions, the horizontal directions, and the oblique directions in a real height U-map RM_H, each of the pixels having a pixel value greater than or equal to a predetermined value. As this labelling process, a known process can be used.

Next, in step S202, the object area detecting unit 512 sets a rectangle that circumscribes each of the pixel groups in each of which the same IDs have been given to the pixels (each of the isolated areas).

Next, the object area detecting unit 512 removes the pixel groups each having the rectangle that has a size less than or equal to a predetermined value (step S203). This is because the pixel groups each having the rectangle that has the size less than or equal to the predetermined value can be determined as noise.

It is also possible to further remove the pixel groups each having, for example, an average of the pixel values (the disparity frequencies) in the rectangular area in the real U-map RM that is less than or equal to a predetermined value.

However, the object area detecting process is not limited to the process described above with reference to FIG. 17. As long as it is possible to detect an area representing an object based on a disparity image, any other known technology may be used.

### ≪Road surface area removing process≫

Next, with reference to FIG. 18, the road surface area removing process in step S13 of FIG. 9 carried out by the determining unit 513 will be described. FIG. 18 is a flowchart illustrating one example of the road surface area removing process. Note that, the process that will now be described with reference to FIG. 18 is carried out for each of the isolated areas detected in the object area detecting process described above with reference to FIG. 17. Below, areas to be processed from among the respective isolated areas detected in the object area detecting process will be referred to as "target areas".

In step S301, the determining unit 513 calculates an area value for overlap (an overlap area value) between the rectangle that circumscribes the target area and a rectangle (hereinafter, which may be referred to as a "road surface estimated area") that circumscribes the area in the real U-map RM corresponding to each of the isolated areas that have been extracted from the small real U-map in steps S102, further extracted in step S104 as the disparity point groups to be processed, and have the processing type determined in step S107 of the road surface area estimating process of FIG. 11.

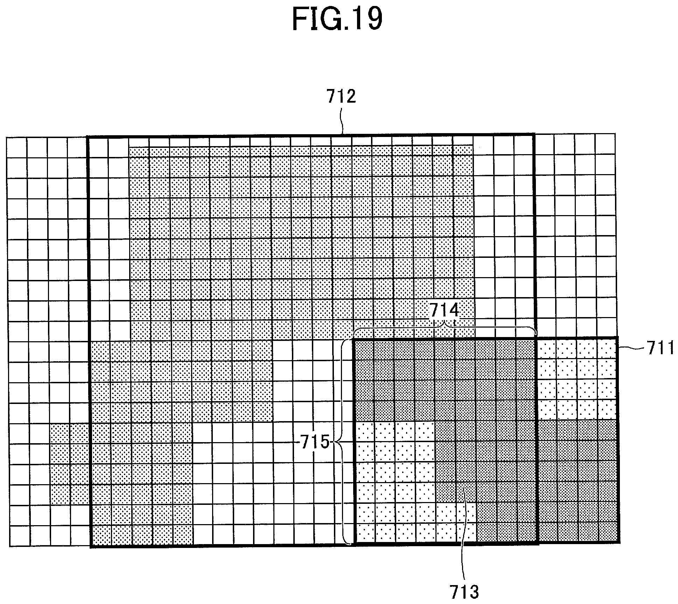

FIG. 19 illustrates a method of calculating an area value of an area where rectangles overlap. The determining unit 513, as illustrated in FIG. 19, calculates the number of pixels where the rectangle 711 that circumscribes the target area overlaps with the rectangle 712 that circumscribes each "road surface estimated area" mentioned above.

For example, the overlap area value is calculated as a result of the number of pixels 714 in the horizontal direction of the overlap area 713 being multiplied by the number of pixels 715 in the vertical direction of the overlap area 713.

For a case where a plurality of rectangles 712 (respectively corresponding to road surface estimated areas) overlap with the rectangle 711 (corresponding to the target area), the greatest area value of the respective area values of the overlap areas 713 corresponding to the plurality of rectangles 712 will be used as the overlap area value for the target area.

Next, in step S302, the determining unit 513 acquires the processing type determined in step S107 of FIG. 11 for the road surface estimated area corresponding to the greatest area value calculated in step S301.

For a case where the processing type determined in step S302 is "processing A", the determining unit 513 determines whether the area value of the target area and the overlap area value satisfy predetermined conditions (step S303). In step S303, for example, the determining unit 513 determines whether the overlap area value is greater than or equal to a predetermined percentage of the area value of the target area.

For a case where the area value of the target area and the overlap area value satisfy the predetermined conditions (for example, for a case where the overlap area value is greater than or equal to the predetermined percentage of the area value of the target area) (Yes in step S303), the determining unit 513 removes the target area from being further processed (step S304), and ends the process for this target area.

For a case where the area value of the target area and the overlap area value do not satisfy the predetermined conditions (for example, for a case where the overlap area value is less than the predetermined percentage of the area value of the target area) (No in step S303), the determining unit 513 ends the process for this target area.

Note that, for a case of the processing A in step S302, the determining unit 513 need not carry out such a determination process as step S303 described above using a relationship between the area value of the target area and the overlap area value. The point of a case of the processing A is that the target area can be removed from being further processed in step S304 without a process of checking the processing result of the object area detecting process of FIG. 17 that is carried out for a case of the processing B of step S302. An example of the process of checking the processing result of the object area detecting process is a process of determining whether the object corresponds to an object of a predetermined type such as a vehicle.

Note that, by thus carrying out such a determining process as step S303 described above using a relationship between the area value of the target area and the overlap area value, it is possible to implement the road surface area removing process with higher accuracy.

For a case where the processing type determined in step S302 is the "processing B", the determining unit 513 first determines whether the target area corresponds to a vehicle or the like. In more detail, the determining unit 513 determines whether the size of the target area and an adjacent disparity distribution of the target area satisfy predetermined conditions (step S305).

For example, for a case where the size of the target area is not equivalent to the size of a vehicle or the like, the determining unit 513 can determine that the predetermined conditions are satisfied.

Also, in another example, for a case where, for each horizontal pixel row in an area that is adjacent to the target area on the near side, the number of consecutive disparity points (pixels) greater than or equal to a predetermined value has a percentage greater than or equal to a predetermined amount with respect to the total number of pixels of the pixel row, the determining unit 513 can determine that the predetermined conditions are satisfied.

Also, in another example, for a case where the number of disparity points in each of a predetermined area that is adjacent to the target area on the near side and a predetermined area that is adjacent to the target area on the far side has a percentage greater than or equal to a predetermined amount with respect to the total number of pixels of the corresponding predetermined area, the determining unit 513 can determine that the predetermined conditions are satisfied.

For a case where the determining unit 513 determines that the size of the target area and the adjacent disparity distribution satisfy the predetermined conditions (Yes in step S305), the determining unit 513 proceeds to step S304.

For a case where the determining unit 513 determines that the size of the target area and the adjacent disparity distribution do not satisfy the predetermined conditions (No in step S305), the determining unit 513 ends the process.

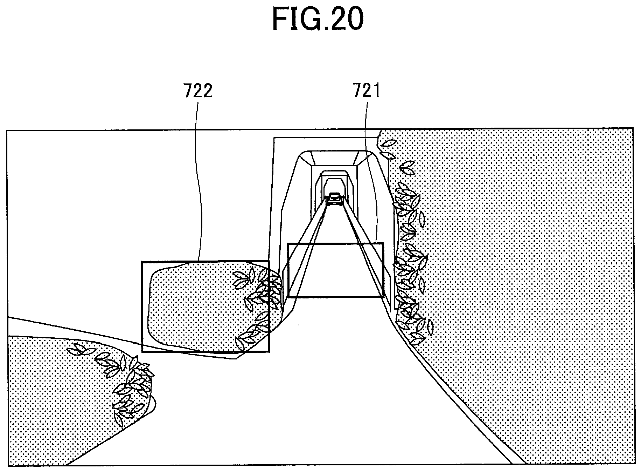

FIG. 20 illustrates a result of the above-described road surface area removing process. Note that although two detection frames 721 and 722 are illustrated in FIG. 20, the detection frame 721 is not actually displayed, and is illustrated for the explanation purpose, as will now be described.

FIG. 20 illustrates a case as if, concerning the reference image Ia of FIG. 12A, the frame generating unit 514 were to generate the detection frames 721 and 722 for areas (recognized areas) in a disparity image Ip (or a reference image Ia) corresponding to object areas detected by the object area detecting unit 512. In this regard, as mentioned above, according to the present embodiment described above, from among the object areas detected by the object area detecting unit 512, the detection frame 721 corresponding to the area determined as corresponding to a road surface by the determining unit 513 is not actually generated in step S14 of FIG. 9 due to the above-described road surface area removing process of FIG. 18 (i.e., step S13 of FIG. 9) .

As a result, according to the present embodiment, recognized area information concerning the detection frame 721 that may be otherwise generated on the basis of disparity of the road surface in the forward direction is not actually output to the tracking unit 530 of FIG. 4 from the frame generating unit 514. Thus, the recognized area information concerning the detection frame 721 (corresponding to the road surface) is excluded from being processed in a tracking process of tracking an object carried out by the tracking unit 530.

### <Summary of embodiments>

For example, a case will now be assumed where a vehicle is now traveling at a steep downhill and a flat road surface occurs in the forward direction; or a vehicle is now traveling at a flat road surface and a steep uphill occurs in the forward direction. In such a case, the third generating unit 501 may erroneously estimate the height of the road surface through straight approximation or the like carried out on a V-map VM, and as a result, disparity points according to the road surface may undesirably appear in a U-map UM.

According to the above-described embodiments, for a case where the depth of an area representing an object in distribution data such as a bird's eye image such as a small real U-map is greater than or equal to the first threshold, the object is determined as a road surface, and as a result, the object is removed from being further processed according to FIGs. 15 and 16 described above. Thus, it is possible to prevent a road surface from consequently being erroneously detected as an object other than a road surface.

Note that, because distance values and disparity values can be treated equivalently, a disparity image is used as one example of a distance image according to the embodiment. However, an actual method of acquiring a distance image is not limited to this manner.

For example, it is also possible to generate a distance image by integrating a disparity image acquired with the use of a stereo camera with distance information generated with the use of a detection apparatus such as millimeter radar, laser radar, or the like.

Further, it is also possible to further improve the detection accuracy by using a stereo camera and a detection apparatus such as millimeter radar, laser radar, or the like together, and combining the object detection result of the stereo camera with the object detection result of the detection apparatus.

The above-described system configuration of the present embodiment is one example, and embodiments are not limited to this system configuration. Depending on particular uses and purposes, various system configuration examples can be used. It is also possible to combine some or all of the above-described respective embodiments together.

For example, functional parts that implement at least some processes of the respective functional parts of the disparity value calculating processing unit 300, the second generating unit 500, the clustering processing unit 510, the tracking unit 530, and so forth of the object recognition apparatus 1 may be implemented by cloud computing configured by one or more computers.

Also, according to the above-described embodiments, the object recognition apparatus 1 is installed in the vehicle 70 that is an automobile. However, embodiments are not limited to such a configuration. For example, the object recognition apparatus 1 may be installed in another vehicle such as a motorcycle, a bicycle, a wheelchair, an agricultural cultivator, or the like. Also, the object recognition apparatus 1 may be installed not only in a vehicle as one example of a moving object but also in another moving object such as a robot.

Further, in a case where, in the above-described embodiments, at least one of the disparity value deriving unit 3 and the recognizing processing unit 5 of the object recognition apparatus 1 is implemented as a result of a program being executed, the program is provided after being stored in a ROM or the like.

The programs executed in the object recognition apparatuses 1 according to the above-described embodiments may be files of an installable or executable type which may be provided after being recorded in computer-readable recording media such as CD-ROMs, flexible disks (FD), CD-Rs, DVDs, or the like.

The programs executed in the object recognition apparatuses 1 according to the above-described embodiments may be provided in such a manner of being stored in computers connected to a network such as the Internet, and of being downloaded via the network.

The programs executed in the object recognition apparatuses 1 according to the above-described embodiments may be provided or delivered via a network such as the Internet.

The programs executed in the object recognition apparatuses 1 according to the above-described embodiments are configured with modules that include at least some of the above-described functional units. The CPU 52 and the CPU 32 as actual hardware read the programs from the ROM 53 and the ROM 33, and execute the programs so that the above-described functional units are loaded and generated in the main storages (the RAM 54, the RAM 34, and so forth).

The information processing apparatuses, the photographing apparatuses, the moving object control systems, the moving objects, the information processing methods, and the programs have been described in the embodiments. However, embodiments of the present invention are not limited to the above-described embodiments, and various modifications and replacements may be made within the scope of the present invention.

The present application is based on Japanese priority application No. 2016-229467, filed November 25, 2016 and Japanese priority application No. 2017-181108, filed September 21, 2017. The entire contents of Japanese priority application No. 2016-229467 and Japanese priority application No. 2017-181108 are hereby incorporated herein by reference.

## Claims

1. An information processing apparatus (1) comprising:
a detecting unit (512) configured to detect a candidate for an object on the basis of information of a position of an object in a vertical direction, a position of the object in a horizontal direction, and a position of the object in a depth direction which are associated with each other; and
a determining unit (513) configured to determine whether the candidate for an object detected by the detecting unit (512) is an object moving surface on the basis of a shape of the candidate for an object, wherein the object moving surface is a surface on which a moving object moves.

2. The information processing apparatus according to claim 1, wherein
the determining unit (513) is further configured
to use a threshold of a first type to determine whether the candidate for an object is an object moving surface, for the candidate for an object that has the shape determined to satisfy a predetermined condition, and
to use a threshold of a second type to determine whether the candidate for an object is an object moving surface, for the candidate for an object that has the shape determined not to satisfy the predetermined condition, wherein the threshold of the second type is such that the candidate for an object is less likely to be determined as being an object moving surface than the threshold of the first type.

3. The information processing apparatus according to claim 2, wherein
the determining unit (513) is further configured
to use the threshold of the first type to determine whether the candidate for an object is an object moving surface, for the candidate for an object determined to have a U-shape, and
to use the threshold of the second type to determine whether the candidate for an object is an object moving surface, for the candidate for an object determined not to have a U-shape.

4. The information processing apparatus according to claim 2 or 3, wherein
the determining unit (513) is further configured
to use the threshold of the first type to determine whether the candidate for an object is an object moving surface, for the candidate for an object determined to have a dimension in the horizontal direction greater than or equal to a predetermined amount, and
to use the threshold of the second type to determine whether the candidate for an object is an object moving surface, for the candidate for an object determined to have a dimension in the horizontal direction less than the predetermined amount.

5. The information processing apparatus according to any one of claims 1-4, wherein
the determining unit (513) is further configured to not carry out determining whether the candidate for an object is an object moving surface, for the candidate for an object determined as being curved.

6. The information processing apparatus according to any one of claims 1-5, wherein
the determining unit (513) is further configured not to use in a subsequent process the candidate for an object determined as an object moving surface.

7. The information processing apparatus according to any one of claims 2-4, wherein
the determining unit (513) is further configured
to determine not to use the candidate for an object in a subsequent process, without determining on the basis of an area of the candidate for an object whether to use the candidate for an object in the subsequent process, for the candidate for an object determined as having a dimension in the depth direction greater than a first threshold of one of the first and second types, and
to determine on the basis of the area of the candidate for an object whether to use the candidate for an object in the subsequent process, for the candidate for an object determined as having a dimension in the depth direction less than or equal to the first threshold and greater than a second threshold of the one of the first and second types.

8. The information processing apparatus according to claim 7, wherein
determination of the determining unit (513) on the basis of the area of the candidate for an object as to whether to use the candidate for an object in the subsequent process is such that the determining unit (513) determines not to use in the subsequent process the candidate for an object determined as an object of a predetermined type.

9. A photographing apparatus (2) comprising:
a plurality of photographing units (10a, 10b);
a generating unit (300) configured to generate the information of the position of an object in the vertical direction, the position of the object in the horizontal direction, and the position of the object in the depth direction which are associated with each other on the basis of a plurality of images respectively taken by the photographing units (10a, 10b); and
the information processing apparatus (1) according to any one of claims 1-8.

10. A moving object control system (60) comprising:
the photographing apparatus (2) according to claim 9; and
a control unit (6) configured to control a moving object (70) on the basis of a determination result of the determining unit (513) of the information processing apparatus (1),
wherein
the moving object (70) has the plurality of photographing units (10a, 10b) of the photographing apparatus (2), the plurality of photographing units (10a, 10b) being configured to photograph images in a forward direction of the moving object (70).

11. A moving object (70) comprising:
the moving object control system (60) according to claim 10,
wherein
the control unit (6) of the moving object control system (60) is configured to control the moving object (70).

12. An information processing method comprising:
detecting, by a computer, a candidate for an object on the basis of information of a position of an object in a vertical direction, a position of the object in a horizontal position, and a position of the object in a depth direction which are associated with each other; and
determining, by the computer, whether the candidate for an object detected through the detecting is an object moving surface on the basis of a shape of the candidate for an object, wherein the object moving surface is a surface on which a moving object moves.

13. A program configured to cause a computer to
detect a candidate for an object on the basis of information of a position of an object in a vertical direction, a position of the object in a horizontal direction, and a position of the object in a depth direction which are associated with each other; and
determine whether the candidate for an object detected through the detecting is an object moving surface, on the basis of a shape of the candidate for an object, wherein the object moving surface is a surface on which a moving object moves.
